# EUROPÄISCHE PATENTSCHRIFT

(11) **EP 0 784 901 B1**
(45) Veröffentlichungstag und Bekanntmachung des Hinweises auf die Patenterteilung: **02.06.1999**
(21) Anmeldenummer: 95931878.3
(22) Anmeldetag: 03.10.1995
(51) Int. Cl.: H04N 1/00, H04N 1/207

(54) **VERFAHREN UND VORRICHTUNG ZUM OPTISCHEN EINLESEN EINER DOKUMENTVORLAGE MIT EINEM SCANNER UND ZUM BEDRUCKEN EINES AUFZEICHNUNGSTRÄGERS MIT EINEM DRUCKER**
PROCESS AND DEVICE FOR OPTICALLY READING A DOCUMENT WITH A SCANNER AND FOR PRINTING A RECORDING MEDIUM WITH A PRINTER
PROCEDE ET DISPOSITIF POUR LA LECTURE OPTIQUE DE DOCUMENTS AU MOYEN D'UN SCANNER ET POUR L'IMPRESSION D'UN SUPPORT D'ENREGISTREMENT AU MOYEN D'UNE IMPRIMANTE

(30) Priorität: 03.10.1994 CH 2969/94
(43) Veröffentlichungstag der Anmeldung: 23.07.1997
(73) Patentinhaber: Baumann, Friedrich Erwin, 3047 Bremgarten b. Bern (CH)
(72) Erfinder: Baumann, Friedrich Erwin, 3047 Bremgarten b. Bern (CH)
(74) Vertreter: BOVARD AG - Patentanwälte
(86) Internationale Anmeldenummer: CH9500223
(87) Internationale Veröffentlichungsnummer: WO9610881

(56) Entgegenhaltungen:
- EP-A- 0 364 827
- EP-A- 0 477 872
- EP-A- 0 488 138
- DE-A- 3 935 713
- PATENT ABSTRACTS OF JAPAN vol. 008 no. 088 (E-240) ,21.April 1984 & JP,A,59 008465 (RICOH KK) 17.Januar 1984,
- PATENT ABSTRACTS OF JAPAN vol. 008 no. 039 (E-228) ,21.Februar 1984 & JP,A,58 197954 (FUJI XEROX KK) 17.November 1983,

## Beschreibung

Die vorliegende Erfindung bezieht sich auf ein Verfahren zum optischen Einlesen einer Dokumentvorlage mit einem Scanner und zum Bedrucken eines Aufzeichnungsträgers mit einem Drucker gemäss dem Oberbegriff des Patentanspruches 1 sowie auf eine Vorrichtung mit einem Scanner zum optischen Einlesen einer Dokumentvorlage und mit einem Drucker zum Bedrucken eines Aufzeichnungsträgers gemäss dem Oberbegriff des Patentanspruches 4.

Sowohl im Geschäftsleben als auch im Privatleben steht man oftmals vor der Aufgabe, eine vorgedruckte Vorlage, beispielsweise ein Steuererklärungsformular oder ein Anmeldeformular für irgend eine Veranstaltung, auszufüllen. Man kann dies entweder von Hand tun, was in der heutigen Zeit ziemlich umständlich ist und für den Formularempfänger mit einem ziemlichen Aufwand zum Entziffern von nicht immer gut lesbaren Schriften verbunden ist. Eine Verbesserung wird dadurch erreicht, dass derartige Formulare mit einer Schreibmaschine ausgefüllt werden, sofern eine solche vorhanden ist. Dies trifft vor allem im Privatbereich nicht überall zu. Zudem ist es auch mit einer Schreibmaschine nicht immer einfach, vorgedruckte Formulare auszufüllen, da hier Grenzen gesetzt sind durch die Formulardicke bzw. die Formularstufe und durch das Formularformat. Zudem ist es zeitaufwendig und schwierig, die Schreibposition der Schreibmaschine genau auf vorhandene Felder oder Zeilen der Vorlage auszurichten.

Mit der starken Verbreitung von Datenverarbeitungsanlagen, insbesondere von Personalcomputern und Druckern, in den letzten Jahren, ist bei jedem EDV-Anwender schon einmal der Wunsch aufgekommen, Vorlagen der eingangs genannten Art mit dem Computer und dem Drucker auszufüllen. Es gibt hier zwar den bekannten und oft behelfsmässig begangenen Weg, ein vorgedrucktes Formular, eine sogenannte Dokumentvorlage, mit einem Scanner optisch zu erfassen, und als Datei im Rechner abzuspeichern. Mit einem Softwareprogramm kann die gespeicherte Dokumentvorlage an einem Datensichtgerät, insbesondere an einem Bildschirm sichtbar gemacht und dort mit zusätzlichen Daten ergänzt bzw. mit den notwendigen Angaben ausgefüllt werden. Derartige zusätzliche Daten können beispielsweise mit einer Tastatur in den Rechner eingegeben und mit einem Textverarbeitungsprogramm in die angezeigte Dokumentvorlage eingefügt werden. Die angezeigte Dokumentvorlage mit den ergänzten Daten kann dann an einen Drucker ausgegeben werden, der diese auf ein leeres Blatt Papier bedruckt, das üblicherweise als Aufzeichnungsträger bestimmt ist. In der DE 39 35 713 ist ein Bilderzeugungsgerät beschrieben, das so arbeitet. Dieses weist eine gemeinsame Steuereinheit auf sowie einen Scanner und einen Drucker. Der Scanner und der Drucker sind auf die Steuereinheit aufsetzbar und es kann mit diesem Gerät ein Bild von einer Vorlage abgescannt und in einem Speicher abgespeichert werden oder es kann ein Blatt Papier mit Informationen aus einem Speicher bedruckt werden. Der Scanner und der Drucker können von der Steuereinheit abgehoben und auch einzeln betrieben werden. Der in diesem Dokument offenbarte Gegenstand ist dazu geeignet, durch eine gezielte Bedienung ab einer Vorlage ein Bild oder einen Bildausschnitt abzuscannen und zu speichern und die gespeicherte Information in einem zweiten getrennten Vorgang an einer ganz bestimmten Stelle eines Blattes Papier, welches nicht identisch zur Dokumentvorlage ist, zu drucken.

Oftmals wird aber verlangt, dass die vorgedruckte Originalvorlage ausgefüllt zurückgesandt wird. Dies gilt beispielsweise in etlichen Kantonen der Schweiz für die Steuererklärungsformulare. Wenn man nun versucht, eine Originalvorlage mit dem Rechner und dem Drucker auszufüllen, so stösst man auf grosse Schwierigkeiten. Selbst wenn es als naheliegend erscheint, ein Softwareprogramm zu entwickeln, das erlaubt, eine eingescannte Originalvorlage auf dem Bildschirm anzuzeigen und mit zusätzlichen Daten an gewünschten Stellen zu ergänzen, wobei dann die Originalvorlage in den Drucker eingeführt wird, und der Drucker so gesteuert ist, dass nur die ergänzten Daten ausgedruckt werden, können die erwähnten Schwierigkeiten nicht beseitigt werden. Durch die zweimalige Handhabung der Originalvorlage, einmal beim Eingeben der Vorlage in den Scanner und ein zweites mal beim Eingeben der Vorlage in den Drucker, kommt es ungewollt ja fast zwangsläufig zu einem Versatz zwischen den Dokumentlagen im Scanner und im Drucker. Die führt dazu, dass die mit dem Computer ergänzten Daten auf der Vorlage nicht genau an der dazu vorgesehenen Stelle gedruckt werden, sondern versetzt dazu. Dies verursacht Ärger, da entweder von einer zuständigen Stelle eine neue Dokumentvorlage zum Ausfüllen angefordert werden muss oder, da die zuständige Stelle die ungenau ausgefüllte Dokumentvorlage nur schlecht lesbar, jedoch auf keinen Fall maschinenlesbar, zurückerhält.

In der EP A 0 477 872 ist ein Faksimilegerät mit einer Leseeinheit und einer Druckeinheit beschrieben. Die Zweckbestimmung und der Aufbau dieses Gerätes sind so, dass ein zu versendendes Dokument an der Leseeinheit und anschliessend an der Druckeinheit vorbeigeführt wird, welche einen Sendebericht auf die Rückseite des Dokumentes druckt. Somit ist es auch mit dieser Vorrichtung nicht möglich, ein vorgedrucktes Formular auszufüllen und dabei insbesondere zu vermeiden, dass die auf dem Formular zu druckenden ergänzenden Daten versetzt zu der vorgesehenen Stelle gedruckt werden.

Es ist deshalb die Aufgabe der vorliegenden Erfindung, ein Verfahren aufzuzeigen und eine Vorrichtung zu schaffen, mit dem eine Originaldokumentvorlage unter Zuhilfenahme eines Scanners, eines Rechners und eines Druckers ausgefüllt werden kann, ohne dass der vorgenannte Versatz zwischen der abgescannten Dokumentvorlage und der bedruckten Dokumentvorlage auftritt.

Gelöst wird diese Aufgabe mit einem Verfahren zum optischen Einlesen einer Dokumentvorlage mit einem Scanner und zum Bedrucken eines Aufzeichnungsträgers mit einem Drucker, wobei die Dokumentvorlage bzw. der Aufzeichnungsträger mit einer Transportvorrichtung längs einem Transportweg relativ zum Scanner und zum Drucker verschoben und sowohl am Scanner als auch am Drucker vorbeigeführt wird und nach dem optischen Einlesen mit dem Drucker zusammengeführt und als Aufzeichnungsträger bedruckt wird, das sich dadurch auszeichnet, dass nach dem Einlesen der Dokumentvorlage mit dem Scanner die Dokumentvorlage auf einem Datensichtgerät eines Rechners sichtbar gemacht und mit Daten ab einem Dateneingabegerät ergänzt wird, und dass die Dokumentvorlage dann als Aufzeichnungsträger lediglich mit den ergänzten Daten bedruckt wird.

Die erfindungsgemässe Vorrichtung zum Lösen der Aufgabe umfasst einen Scanner zum optischen Einlesen einer Dokumentvorlage und mit einem Drucker zum Bedrucken eines Aufzeichnungsträgers, sowie mit einer Transporteinrichtung zum relativen Verschieben der Dokumentenvorlage bzw. des Aufzeichnungsträgers zum Scanner bzw. zum Drucker längs einem Transportweg, und mit Mitteln, um die Dokumentvorlage nach dem optischen Einlesen mit dem Drucker zusammenzuführen und als Aufzeichnungsträger zu bedrucken, wobei die Dokumentvorlage mit dem Aufzeichnungsträger identisch ist und zwischen dem Scannvorgang und dem Druckvorgang in der Vorrichtung verbleibt, und zeichnet sich dadurch aus, dass die Vorrichtung einen Rechner mit mindestens einem Datensichtgerät, mit einem Dateneingabegerät, sowie mit einem Softwareprogramm umfasst, wobei mit dem Softwareprogramm die optisch eingelesene Dokumentvorlage am Datensichtgerät anzeigbar und mit Daten ab dem Dateneingabegerät ergänzbar ist und lediglich diejenigen Daten (10"), mit denen die am Datensichtgerät (34) angezeigte Dokumentvorlage (10') ergänzt worden ist, am Drucker (16) ausgebbar sind.

Dadurch, dass die Dokumentvorlage, die identisch zum Aufzeichnungsträger ist, bedruckt wird, ohne die Vorrichtung zwischen dem Scannvorgang und dem Druckvorgang zu verlassen, ist eine zweimalige manuelle Eingabe der Dokumentvorlage nicht erforderlich. Es kommt somit nicht zum vorgenannten Versatz. Es kann jedoch sehr wohl sein, dass die Dokumentvorlage bereits schief in die Vorrichtung eingegeben wird. Ein Softwareprogramm, das die abgescannte Dokumentvorlage an einem Datensichtgerät eines Rechners, insbesondere an einem Bildschirm eines Personalcomputers anzeigt, zeigt in diesem Fall die abgescannte Vorlage auf dem Bildschirm ebenfalls in einer Schieflage an. Damit die auf dem Bildschirm sichtbare, abgescannte Vorlage auf einfache Art, beispielsweise mit einem Textverarbeitungsprogramm, mit Daten ergänzt werden kann, muss die abgescannte Vorlage von der genannten Schieflage in eine definierte Lage gebracht werden können. Softwaremässig kann dies dadurch gelöst werden, dass Werkzeuge vorhanden sind, mit denen die Vorlage auf dem Bildschirm in einer X- und/oder Y-Richtung verschoben werden kann, mit denen die Vorlage um einen bestimmten, softwaremässig festlegbaren Drehpunkt gedreht werden kann und mit denen die angezeigte Vorlage vergrössert oder verkleinert werden kann.

Wenn nun die Vorlage in einer definierten, vorzugsweise auf die Bildschirmachsen ausgerichteten Lage ist, so kann sie leicht mit Schriftzeichen, Grafiksymbolen und/oder anderen Objekten ergänzt werden. Schriftzeichen, Symbole und/oder Objekte können auf diese Weise auf dem Bildschirm an einer gewünschten Stelle zur Dokumentvorlage ausgerichtet zur Anzeige gebracht werden. Als Objekte können beispielsweise auch leere Ausfüllrahmen definiert werden, die dann mit Schriftzügen oder anderen Informationen ergänzt werden können. Solche Ausfüllrahmen haben den Vorteil, gleichartige Dokumentvorlagen schneller und einfacher ausfüllen zu können, indem dazu lediglich die Ausfüllrahmen mit dem Cursor anzuspringen sind. Feldgrössen und Schriftarten können hier als Vorgaben bereits vordefiniert sein. Derartige Ausfüllrahmen können auch als Datei zugehörend zu einer ganz bestimmten Dokumentvorlage gespeichert werden.

Wenn die zum Ausrichten der angezeigten Dokumentvorlage auf eine definierte Lage notwendigen Verschiebe- und/oder Drehbewegungen sowie Grössenänderungen als Transformationsparameter in einem Datenspeicher des Rechners abgespeichert werden, so können diese Transformationsparameter später dazu benutzt werden, die ergänzten Daten umzurechnen und diese vor dem Ausdrucken der physischen Lage und Grösse der in diesem Beispiel schief in die Vorrichtung eingegebenen Dokumentvorlage anzupassen. Beim Drucken erscheinen dann die ergänzten Daten genau an der richtigen Stelle und in der proportional richtigen Grösse und Ausrichtung zur physischen Dokumentvorlage, entsprechend der am Bildschirm angezeigten, mit Daten ergänzten Vorlage.

Die Daten, mit denen eine Dokumentvorlage am Bildschirm ergänzt wird, können mit einem Dateneingabegerät, insbesondere mit einer Tastatur, in den Rechner eingegeben werden oder können, was beim mehrmaligen gleichen Ausfüllen von gleichen Dokumentvorlagen vorteilhaft ist, ab einer Datei, die in einem Datenspeicher vorhanden ist. herangezogen werden.

Im letztgenannten Fall kann nicht verhindert werden, dass zwischen der Eingabe der einzelnen Dokumentvorlagen, die alle gleich ausgefüllt werden sollen oder mit einer Serie von Adressen, ähnlich Serienbriefen, versehen werden sollen, ein Versatz bezüglich einem angenommenen Vorlagennullpunkt vorhanden ist. Damit die eingangs genannten Schwierigkeiten nicht auftreten, muss deshalb entweder nach jeder eingescannten Dokumentvorlage die vorbeschriebene Transformation vor der Datenergänzung vorgenommen werden oder es kann vorgesehen sein, dass die Software selbst ein Werkzeug umfasst, mit welchem bei der ersten eingescannten Dokumentvorlage ein Vorlagennullpunkt bzw. eine Vorlagennullinie, eine Referenzstelle oder Referenzlage definiert wird, so dass das Softwareprogramm bei nachfolgenden gleichartigen Dokumentvorlagen nach dem Scannvorgang selbst einen Versatz zwischen den einzelnen Dokumentvorlagen erkennen und softwaremässig durch weitere Transformationsparameter, die durch die unterschiedliche Lage der Vorlagennullpunkte bzw. Vorlagennullinien der Referenzstellen oder Referenzlagen ausgleichen kann.

Das Softwareprogramm, das Bestandteil dieser Erfindung ist, weist im weiteren Werkzeuge auf, mit denen die abgescannte Dokumentvorlage zusammen mit den ergänzten Daten in einer Datei im Datenspeicher abspeicherbar ist oder mit denen auch nur die ergänzten Daten in einer Datei des Datenspeichers abspeicherbar sind.

Damit der Druckvorgang auf der Dokumentvorlage am richtigen Ort beginnen kann, wenn die Dokumentvorlage nach dem Einscannvorgang am Bildschirm mit weiteren Daten ergänzt worden ist, sind vorzugsweise längs dem relativen Transportweg zwischen der Dokumentvorlage und dem Scanner sowie dem Drucker Mittel vorzusehen, mit denen die relative Position der Dokumentvorlage bzw. der zum Aufzeichnungsträger gewordenen Dokumentvorlage zum Scanner bzw. zum Drucker genau erfasst werden kann. Dies kann beispielsweise dadurch geschehen, dass mit diesen Mitteln eine vordere Endkante oder ein vorderer Endpunkt der Vorlage detektiert wird. Möglich ist dies unter anderem mit optischen Mitteln. mit Lichtschranken, insbesondere mit einem streifenförmigen Lichtvorhang.

Es kann im weiteren vorgesehen sein, dass mit der Transporteinrichtung zum Verschieben der Dokumentvorlage bzw. des Aufzeichnungsträgers ein Weg beschrieben wird, der von einer Eingabeeinrichtung für die Dokumentvorlage zu einer Ausgabeeinrichtung für den Aufzeichnungsträger bzw. die Dokumentvorlage in einer geradlinigen, im wesentlichen horizontalen Bahn verläuft. Zwischen dem Scanner und dem Drucker, die längs dem Transportweg angeordnet sind, ist in einer ersten Ausführungsart ein derart grosser Abstand vorzusehen, dass das grösstmögliche abzuscannende Format einer Dokumentvorlage zwischen dem Scanner und dem Drucker liegen kann. Dies führt zwangsläufig zu relativ grossen Scanner/Druckereinheiten.

Eine Verkleinerung einer solchen Einheit lässt sich dadurch erzielen, dass die Transporteinrichtung derart ausgelegt ist, dass die Dokumentvorlage bzw. der Aufzeichnungsträger innerhalb der Vorrichtung vorwärts und rückwärts transportiert werden kann. Eine Dokumentvorlage kann dann mit dem Scanner vollständig eingelesen werden, anschliessend soweit zurücktransportiert werden, bis das vordere Ende der Dokumentvorlagen unmittelbar vor dem Drucker liegt, um dann mit den ergänzten Daten bedruckt zu werden. Durch eine solche Vor/Rückwärtsumschaltung der Förderrichtung der Transporteinrichtung ist es möglich, den vorgenannten Abstand zwischen dem Scanner und dem Drucker in einer zweiten Ausführungsart auf ein Minimum zu reduzieren.

Ein geradliniger Transportweg hat zudem den Vorteil, dass auch relativ dicke, bzw. relativ steife Dokumentvorlagen einwandfrei bearbeitet werden können.

Selbstverständlich ist es auch möglich, und dies ist in den Patentansprüchen durch den Ausdruck "relativ" angezeigt, die Dokumentvorlage auf einem Auflagetisch abzulegen und mit der Transporteinrichtung anstelle der Dokumentvorlage gemäss den vorherigen Beispielen, die Scanner/Druckereinheit gegenüber der stilliegenden Dokumentvorlage zu verschieben. Es handelt sich bei einem solchen dritten Ausführungsbeispiel lediglich um eine kinematische Umkehr der Bewegungsabläufe.

Ein viertes Ausführungsbeispiel sieht einen Flachbettscanner, dem ein Drucker nachgeschaltet ist, vor. Eine Transporteinrichtung würde in diesem Fall die auf dem Flachbettscanner gelegene Dokumentvorlage zum Drucker weiter transportieren.

Eine Verkleinerung der Scanner/Druckereinheit könnte gemass einem fünften Ausführungsbeispiel auch dadurch erfolgen, dass der Transportweg nicht geradlinig verläuft, sondern im wesentlichen einen U beschreibt. Der Scanner und der Drucker könnten dann übereinander angeordnet sein. Vorteilhaft wäre, dass in diesem Beispiel die Eingabeeinrichtung und die Ausgabeeinrichtung auf der gleichen Seite übereinander liegen. Hingegen dürfte bei einer derartig ausgestalteten Scanner/Druckereinheit der Transport von relativ dicken und/oder steifen Vorlagen durch das Umlenken nicht ganz unproblematisch sein.

Die Transporteinrichtung umfasst, falls die Dokumentvorlage verschoben wird, mindestens ein Förderorgan. Dieses kann aus mehreren Rollen- oder Walzenpaaren bestehen, wobei jeweils eine obere Walze federnd auf einer unteren Walze aufliegt und ein Walzenpaar bildet, durch welches die Dokumentvorlage längs dem Transportweg durchführbar ist. Vorteilhafterweise ist als Förderorgan jedoch ein angetriebenes Förderband vorgesehen, auf welchem die Dokumentvorlage aufliegt und längs dem Transportweg geführt wird.

Wichtig ist es, dass dafür gesorgt wird, dass die Dokumentvorlage während dem ganzen Bearbeitungsvorgang Scannen-Drucken nicht relativ zu seiner Erstauflage verschoben wird bzw. auf dem Förderorgan abweichend von der Transportrichtung verrutscht wird. Dies kann durch Andruckfedern oder Andruckplatten, mit denen die Dokumentvorlage auf dem Auflagetisch gehalten ist oder gegen das Förderband gedrückt wird bzw. durch das Vorsehen eines geringen Abstandes von Walzenpaaren in der Transportrichtung bei allen den erwähnten Ausführungsbeispielen relativ einfach realisiert werden.

Während in den vier erstgenannten Ausführungsbeispielen der Scanner und der Drucker auf einer gleichen physischen und logischen Ebene liegen, befinden sich im fünften Ausführungsbeispiel, U-förmiger Transportweg der Dokumentvorlage, der Scanner und der Drucker auf einer gleichen logischen Ebene. Die physische Ebene ist hier, da der Scanner und der Drucker übereinanderliegend angeordnet sind, ungleich.

Selbstverständlich ist es auch möglich, die ganze erfindungsgemässe Vorrichtung in einem Desktop- oder Laptop-Rechner unterzubringen. Laptop-Rechner, bei denen ein Drucker bereits eingebaut ist, existieren bereits. Das zusätzliche Vorsehen eines Scanners in solchen Rechnern kann lediglich noch eine Frage der Zeit sein.

Dass das vorstehend angesprochene Softwareprogramm auch weitere Werkzeuge umfasst, so dass lediglich einzelne Scannervorgänge und Druckvorgänge in der herkömmlichen Art durchgeführt werden können, braucht nicht besonders erwähnt zu werden.

Anhand von Ausführungsbeispielen. die in Figuren dargestellt sind. ist die Erfindung nun im folgenden näher erläutert. Es zeigen
Fig. 1 eine schematische Ansicht eines bevorzugten Ausführungsbeispieles einer erfindungsgemassen Vorrichtung,
Fig. 2 eine Seitenansicht einer Scanner/Druckereinheit der Vorrichtung gemäss der Fig. 1,
Fig. 3 ein Blockschaltbild der Vorrichtung gemäss der Fig. 1,
Fig. 4 die Vorrichtung gemäss der Fig. 1 zum Erläutern eines Scann/Druckvorganges anhand eines Anwendungsbeispieles, und
Fig. 5 die Anzeige auf einem Bildschirm für das Anwendungsbeispiel gemäss der Fig. 4.

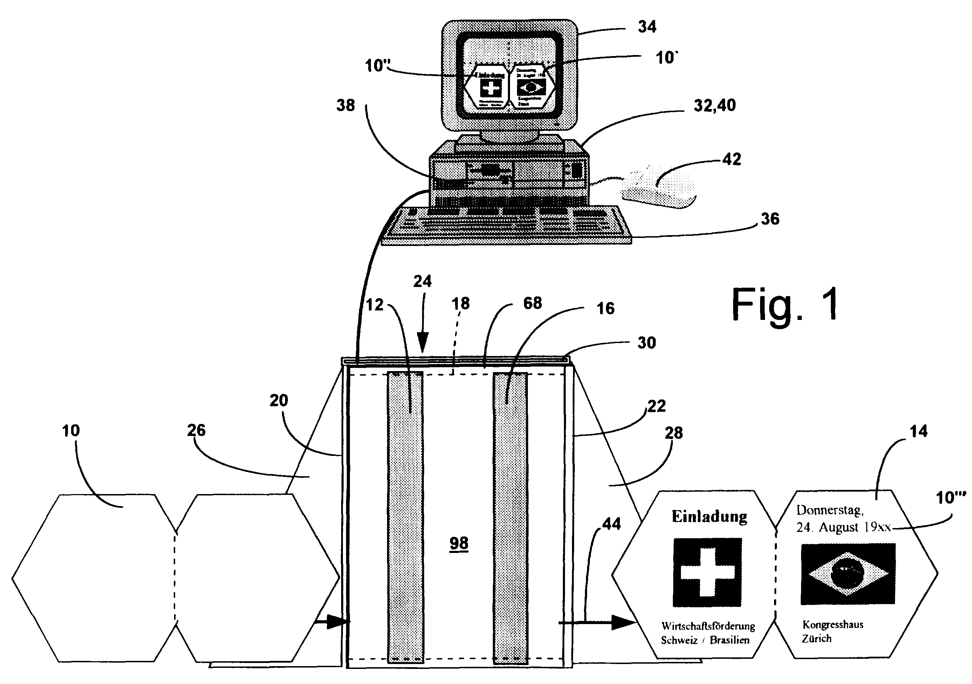

Das in der Fig. 1 dargestellte, bevorzugte Ausführungsbeispiel einer erfindungsgemässen Vorrichtung umfasst eine Scanner/Druckereinheit 24, welche ihrerseits ein Basisgehäuse 68 aufweist, in welchem eine Transportvorrichtung 18 angeordnet ist, um eine auf einen Eingabetisch 26 aufgelegte Dokumentvorlage 10, insbesondere ein vorgedrucktes Formular, von einer Eingabeeinrichtung 20 längs einem in diesem Ausführungsbeispiel durch die Transporteinrichtung 18 festgelegten, geradlinigen Transportweg zu einer Ausgabeeinrichtung 22 zu fördern und dort auf einen Ausgabetisch 28 auszugeben. Die Transportrichtung ist mit dem Pfeil, der mit dem Bezugszeichen 44 versehen ist, angegeben. Die Transportvorrichtung 18 kann mehrere Walzenpaare mit je zwei übereinanderliegenden, federnd gegeneinandergepressten Walzen umfassen oder kann als Transportband ausgebildet sein. Über der Transporteinrichtung 18 sind ein Scanner 12 zum optischen Einlesen der Dokumentvorlage 10 und ein Drucker 16 zum Bedrucken, insbesondere der Dokumentvorlage mit zusätzlichen Daten angeordnet. Beide Geräte 12, 16 sind längs dem Transportweg angeordnet, wobei der Scanner 12 in der Transportrichtung 44 betrachtet. dem Drucker 16 vorgelagert ist. Der mit dem Drucker 16 bedruckte Aufzeichnungsträger ist mit dem Bezugszeichen 14 bezeichnet. Bei der Ausführung des erfindungsgemässen Verfahrens sind die Dokumentvorlage und der Aufzeichnungsträger identisch. Die Daten, mit denen die vorgedruckte Dokumentvorlage ergänzt worden ist, sind mit 10"' bezeichnet. Das Bezugzeichen 30 deutet ein Scharnier an, womit ein den Scanner 12 und den Drucker 16 umfassendes Modul 98 der Scanner/Druckeinheit 24 gegenüber dem Basisgehäuse 68 aufklappbar bzw. aufgeschwenkt werden kann. Eine derartige Ausführung ist besonders für Reinigungszwecke und vor allem zum Beheben von irgendwelchen aufgetretenen Transportproblemen für die Dokumentvorlage 10 vorteilhaft.

Die Scanner/Druckereinheit 24 ist über ein nicht näher bezeichnetes Kabel mit einem Rechner 32 verbunden. Dies ist im gezeigten Ausführungsbeispiel ein in einer bekannten Art ausgerüsteter Personalcomputer, an den ein Datensichtgerät, insbesondere ein Bildschirm 34 und ein Dateneingabegerät, insbesondere eine Tastatur 36, angeschlossen sind. Ebenfalls an den Rechner 32 angeschlossen ist zum Steuern von Programmen eine Maus 42. Der Rechner umfasst im weiteren neben einer nicht näher bezeichneten Festplatte ein weiteres Dateneingabegerät, eine Diskettenstation 38. Sowohl der Arbeitsspeicher des Rechners, die Festplatte und die mit der Diskettenstation 38 beschreibbaren und lesbaren Disketten sind als Datenspeicher des Rechners versehen.

Auf dem Bildschirm 34 ist mit 10' die abgescannte Dokumentvorlage gezeigt, die mit zusätzlichen Daten, wie alphanumerische Zeichen, Schriftzüge, Grafiksymbole oder anderen Objekten, die mit 10" bezeichnet sind, ergänzt worden ist.

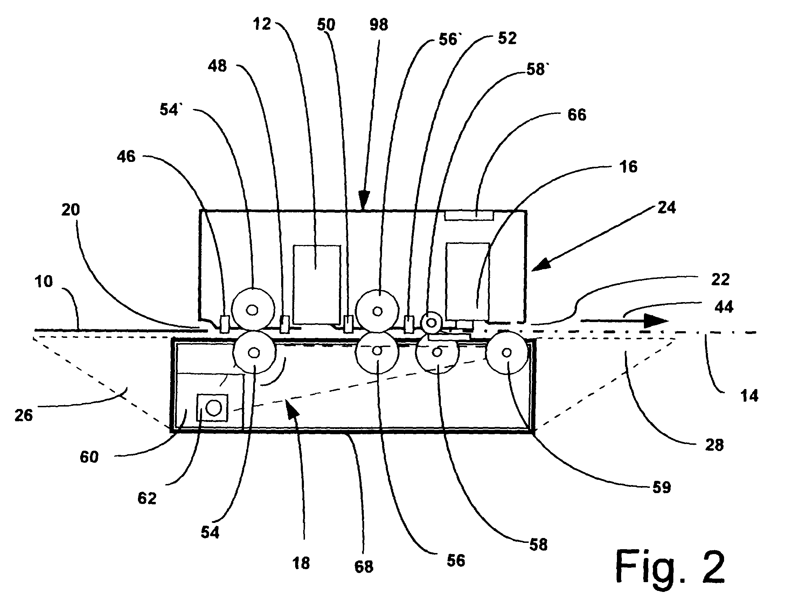

Die Scanner/Druckereinheit 24 ist in der Fig. 2 in einer Seitenansicht schaubildlich dargestellt. Die Scanner/Druckereinheit kann gemäss der gezeigten Ausgestaltung sehr kompakt, platzsparend und kostengünstig gebaut werden. Es können damit Dokumentvorlagen 10 verschiedenster Grössen, Dicken und Formate abgescannt auf dem vorgängig genannten Personalcomputer bearbeitet und anschliessend mit ergänzten Daten bedruckt werden. Selbstverständlich ist es möglich, die Scanner/Druckeinheit auch nur als Scanner oder nur als Drucker oder als Fax sowie als einfacher Kopierer einzusetzen. Die verschiedenen Funktionen lassen sich beispielsweise ab einer Bedienungsplatine 66 oder softwaremässig vom Rechner eingeben.

Die Scanner/Druckereinheit 24 umfasst das Basisgehäuse 68, in welchem die Transporteinrichtung 18 angeordnet ist. Im gezeigten Ausführungsbeispiel weist die Transporteinrichtung vier mit einem umlaufenden Riemen angetriebene untere Walzen 54, 56, 58, 59 auf. Als Antriebsmittel ist ein Elektromotor 62 vorgesehen, der mit einer Steuereinrichtung 60 reversierbar antreibbar ist.

Je seitlich vom Basisgehäuse 68 sind der Eingabetisch 26 zum Eingeben der Dokumentvorlage 10 durch die Eingabeeinrichtung 20 und der Ausgabetisch 28 angeordnet, auf den die in der Scanner/Druckereinheit 24 bearbeitete Dokumentvorlage 10 bzw. ein Aufzeichnungstrager 14 durch die Ausgabeeinrichtung 22 ausgegeben wird. Über dem Basisgehäuse 68 ist das Modul 98 angeordnet, das als wichtigste Komponenten den Scanner 12 und den Drucker 16 umfasst. Im Modul 98 sind im weiteren obere Walzen 54', 56', 58' drehbar und in einer vertikalen Richtung federnd gelagert. Diese oberen Walzen 54', 56', 58' drücken auf die bereits genannten korrespondierenden unteren Walzen 54, 56, 58 und bilden mit diesen je drei Walzenpaare, durch welche die Dokumentvorlage zum Scannen und zum Bedrucken durchgeführt wird. Jedes Walzenpaar entspricht dabei einem angetriebenen Förderorgan. Wie bereits gesagt, könnte in einer Ausführungsvariation als Förderorgan anstelle der unteren Walzen 54, 56. 58 ein umlaufendes Transportband vorgesehen sein. Die oberen Walzen 54', 56', 58' könnten in diesem Fall auch durch Andruckfedern oder Andruckplatten ersetzt sein, um eine Dokumentvorlage 10 gegen das Förderband zu drücken. Zum Auswerfen der Dokumentvorlage 10 bzw. des Aufzeichnungsträgers 14 aus der Scanner/Druckereinheit 24 auf den Ausgabetisch 28 ist eine dem Drucker 16 nachgeordnete, weitere untere Walze 59 vorgesehen.

Um die physische Lage einer Dokumentvorlage 10 längs dem Transportweg innerhalb der Scanner/Druckereinheit feststellen zu können und insbesondere um die Dokumentvorlage 10 auf eine bestimmte gewünschte Position verschieben zu können, sind ein erstes, zweites, drittes und viertes Feststellorgan 46, 48, 50, 52 längs dem Transportweg angeordnet. Es sind im gezeigten Ausführungsbeispiel Reflexionslichtschranken vorgesehen. Damit lässt sich beispielsweise ein Anfangskonturpunkt oder eine Anfangskante einer Dokumentvorlage bzw. ein Endkonturpunkt oder eine Endkante der Dokumentvorlage feststellen. Um eine möglichst genaue Positionierung der Dokumentvorlage zu gewährleisten, wird bevorzugt für jedes Feststellorgan 46, 48, 50, 52 ein streifenförmiger Lichtvorhang eingesetzt, der sich je über die ganze Breite der Scanner/Druckereinheit 24 erstreckt kann.

Im gezeigten Ausführungsbeispiel ist der in der Transportrichtung 44 vorhandene Abstand zwischen dem Scanner 12 und dem Drucker 16 relativ gering. Das Abscannen und nachträgliche Bedrucken eines bereits vorgedruckten Formulares kann wie folgt erfolgen: Das erste Feststellorgan 46 erkennt, wenn eine Dokumentvorlage 10 in die Einführeinrichtung 20 eingeschoben wird. Das dadurch vom ersten Feststellorgan 46 erzeugte elektrische Signal veranlasst über den Rechner 32 oder über die Steuereinrichtung 60 das Inbetriebsetzen der Transporteinrichtung 18 in der Transportrichtung 44. Die Dokumentvorlage 10, die manuell bis zum ersten Walzenpaar 54, 54' vorgeschoben worden ist, wird durch die Transportvorrichtung 18 nun weitertransportiert, bis ein erster Konturpunkt der Dokumentvorlage 10 vom zweiten Feststellorgan 48 detektiert wird. Der Transportmechanismus wird für kurze Zeit gestoppt. Die Dokumentvorlage 10 befindet sich nun in einer Bereitschaftsstellung für einen anschliessenden Scannvorgang. Dazu wird die Dokumentvorlage nach dem Wiedereinschalten der Transporteinrichtung 18 in der Transportrichtung 44 vorwärts gefördert, unter dem Scanner 12 hindurch, solange, bis das dritte Feststellorgan 50 den letzten Konturpunkt der abgescannten Dokumentvorlage 10 erkennt. Der Transportmechanismus wird wiederum gestoppt. Je nach der Länge der Dokumentvorlage kann sich deren vorderes Ende bereits im Bereiche der Ausgabeeinrichtung 22 bzw. unterhalb dem Drucker 16 befinden. Bevor die Dokumentvorlage nun mit ergänzten Daten bedruckt werden kann, muss diese relativ zum Drucker 16 in eine definierte Ausgangslage gebracht werden. Dazu wird der Transportmechanismus wiederum eingeschaltet, jetzt aber in der zur Transportrichtung 44 entgegengesetzten Richtung. Die abgescannte Dokumentvorlage 10 wird dabei zur Eingabeeinrichtung 20 hin zurückgefördert, soweit, bis das vierte Feststellorgan 52 einen auf die invertierte Transportrichtung bezogenen Endkonturpunkt der Dokumentvorlage 10 erkennt. Der Transportmechanismus wird wiederum gestoppt. Jetzt kann, wie weiter hinten erklärt ist. die inzwischen auf dem Bildschirm 34 des Personalcomputers 32 sichtbar gemachte abgescannte Dokumentvorlage 10' mit zusätzlichen Daten ergänzt werden. Ist dies geschehen, so werden die ergänzten Daten auf das vorgedruckte Formular, die vorgängig abgescannte Dokumentvorlage 10, gedruckt. Dazu wird der Transportmechanismus wiederum eingeschaltet und die Dokumentvorlage 10 unter dem Drucker 16 hindurchgefördert, dort mit den ergänzten Daten bedruckt und an der Ausgabeeinrichtung 22 auf den Ausgabetisch 28 ausgegeben.

Lediglich Scannvorgänge, Druckvorgänge, Kopier- oder Faxvorgänge, gemäss dem Stand der Technik werden von der Erfindung nicht erfasst und sind deshalb nicht näher beschrieben.

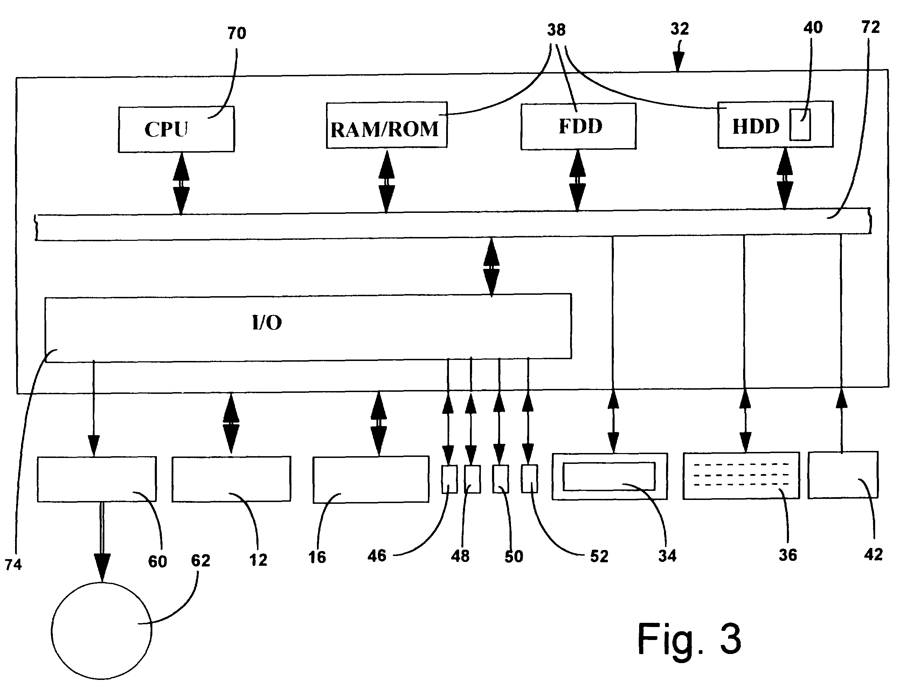

Im Blockschaltbild gemäss der Fig. 3 ist der Aufbau des Rechners 32 gezeigt. Es ist im wesentlichen ein standardmässiger Personalcomputer mit einem Bussystem 72, an dem die Recheneinheit (CPU) 70 und verschiedene Datenspeicher 38 angeschlossen sind. Es sind dies ein Arbeitsspeicher (RAM/ROM), ein Diskettenschreib/Lesegerät (FDD) und eine Festplatte (HDD), wobei die beiden letztgenannten Datenspeicher mit den entsprechenden, nicht gezeichneten Kontrollern ausgerüstet sind. An den Rechner 32 angeschlossen sind - auch dies ist lediglich schematisch dargestellt - der Bildschirm 34, die Tastatur 36 und die Maus 42. Ein Ein/Ausgabestromkreis (1/O) 74 ist dazu vorgesehen, die von den Feststellorganen 46, 48, 50, 52 abgegebenen Signale einzulesen, entsprechend einem Softwareprogramm 40 zu verarbeiten und den Motor 62 der Transporteinrichtung 18 über die Steuereinrichtung 60, wie vorgängig beschrieben, in Gang zu setzen oder zu stoppen. An den Ein/Ausgabestromkreis angeschlossen sind ebenfalls der Scanner 12 und der Drucker 16. Schnittstellen und Treiber dazu sind standardmässig vorhanden.

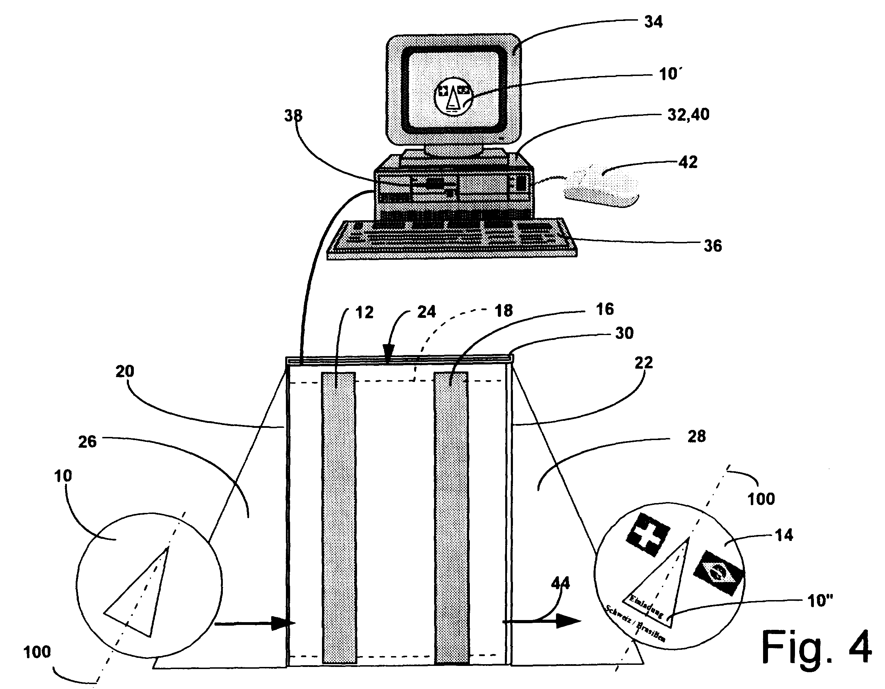

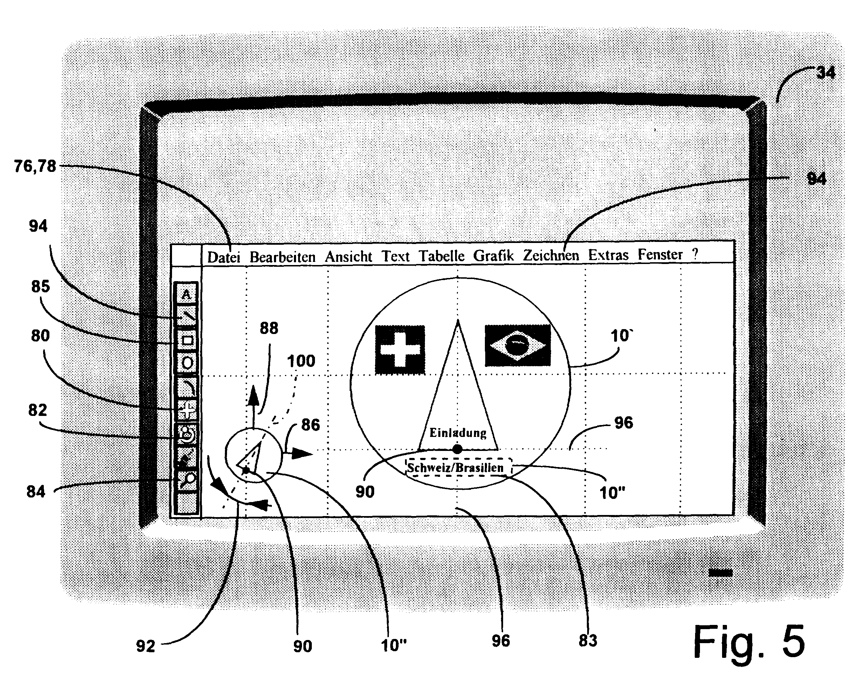

Die Steuerung eines Scann- und Druckvorganges, wie vorgängig beschrieben, mit dem dazwischenliegenden Ergänzen der abgescannten, am Bildschirm angezeigten Dokumentvorlage 10' mit zusätzlichen Daten wird durch ein speziell entwickeltes Softwareprogramm 40 erreicht. Dieses ist normalerweise auf der Festplatte (FDD) 38 des Rechners gespeichert und wird zum Ausführen in den Arbeitsspeicher (RAM) geladen. Näheres zu den Eigenschaften und den einzelnen Werkzeugen, die im Softwareprogramm 40 vorgesehen sind, kann nachfolgend dem im gemäss den Fig. 4 und 5 dargestellten Anwendungsbeispiel entnommen werden.

In der Fig. 4 ist eine vollständige erfindungsgemässe Vorrichtung gezeigt, wie sie bereits vorgängig beschrieben worden ist. Als Dokumentvorlage 10 ist hier absichtlich ein kreisrundes Formular gewählt worden, auf dem ein gleichschenkliges, spitzwinkliges Dreieck bereits vorgedruckt sei. Es gilt nun, diese Dokumentvorlage 10 symmetrisch zu einer durch den spitzen Winkel des Dreiecks verlaufenden Symmetrielinie 100 mit zusätzlichen Daten zu bedrucken. Wie die Fig. 4 zeigt ist es schwierig und in einer vernünftigen Zeit kaum möglich, die kreisrunde Dokumentvorlage 10 derart in die Eingabeeinrichtung 20 einzuführen, dass die genannte Symmetrielinie 100 genau rechtwinklig zur Transportrichtung 44 liegt. Mit grösster Wahrscheinlichkeit wird die kreisrunde Dokumentvorlage 10, wie es die Figur zeigt, in irgend einer schiefen Lage in die Eingabeeinrichtung 20 der Scanner/Druckereinheit 24 eingegeben. Der Scannvorgang erfolgt, wie vorgängig beschrieben. Mit dem zweiten und dritten Feststellorgan 48, 50 werden dabei ein Anfangskonturpunkt der kreisrunden Vorlagenscheibe und ein Endkonturpunkt der Scheibe erfasst. Die abgescannte Vorlage wird, in einem bestimmten Massstab, auf dem Bildschirm 34 dargestellt, so wie sie in der Fig. 5 in der linken unteren Ecke beispielsweise sichtbar ist. Das spitzwinklige Dreieck der abgescannten Dokumentvorlage 10' weist dabei die genau gleiche schiefe Lage auf, die durch die schief in die Scanner/Druckereinheit 24 eingegebene Original-Dokumentvorlage 10 vorgegeben worden ist.

Die abgescannte Dokumentvorlage 10' in der Fig. 5 ist nicht in einer geeigneten Lage und Grösse, um mit zusätzlichen Daten ergänzt zu werden. Eine Transformation ist erforderlich. Die abgescannte Dokumentvorlage 10' wird nun mit einem Werkzeug, in diesem Fall mit einem vierten Werkzeug 82, um einen angenommenen Drehpunkt 90 um einen Winkel 92 so weit gedreht, bis die genannte Symmetrielinie 100 parallel zu einer vertikalen Linie eines auf dem Bildschirm angezeigten Gitters 96 zu liegen kommt. Mit einem dritten Werkzeug 80 wird die um den Winkel 92 gedrehte, abgescannte Dokumentvorlage 10' beispielsweise zur Mitte des Bildschirmes hin verschoben und mit einem fünften Werkzeug 84 vergrössert, so dass eine Bearbeitung der abgescannten Dokumentvorlage 10' nun leicht erfolgen kann. Die genannten Transformationsvorgänge können selbstverständlich in jeder beliebigen Reihenfolge vorgenommen werden. Jeder einzelne Vorgang auch in mehreren Schritten. Mit dem Bezugszeichen 85 ist ein sechstes Werkzeug bezeichnet, mit dem bei einer eingescannten Dokumentvorlage Ausfüllrahmen 83 in einer gewünschten Grösse an einem gewünschten Ort auf den Bildschirm positioniert werden können. Dies ermöglicht insbesondere ein schnelleres Ausfüllen mehrerer gleichartiger Dokumentvorlagen mit unterschiedlichen Daten. Die Ausfüllrahmen können mit dem Cursor direkt angesprungen werden. Für jeden Ausfüllrahmen können Eigenschaften, wie z.B. die Schriftart, definiert werden.

Über die Tastatur oder ein anderes Dateneingabegerät wird nun die abgescannte Dokumentvorlage 10' beispielsweise parallel zur Grundlinie des vorgedruckten Dreieckes mit Schriftzügen 10" versehen. Im Bereiche des Scheitelwinkels des Dreieckes werden rechts und links davon aus einer Objektbiliothek, die heutzutage praktisch in jedem Rechner vorhanden ist, beispielsweise Wappen eingefügt. Ein Vorgang, der mit dem bekannten Windows-Programm von Microsoft und mit der Maus 42, beispielsweise mit dem Drag- and Drop-Verfahren, einfach ausgeführt werden kann.

Nach dem Erganzen der eingescannten Dokumentvorlage 10' kann diese mit einem ersten Werkzeug 76 entweder zusammen mit den ergänzten Daten 10" in einem der genannten Datenspeicher 38 abgespeichert werden oder es können im Datenspeicher 38 lediglich die ergänzten Daten abgelegt werden. Ebenfalls können vordefinierte oder bereits vorausgefüllte Ausfüllrahmen 83 einer bestimmten Dokumentvorlage zugeordnet, als Datei in einem der genannten Datenspeicher 38 gespeichert werden. Mit einem zweiten Werkzeug 78 kann ein Druckbefehl erteilt werden, wonach die sich in der Scanner/Druckereinheit noch befindliche Dokumentvorlage 10 mit den ergänzten Daten 10"' bedruckt wird. Die Ausrichtung der Dokumentvorlage 10 zum Drucker 16 erfolgt mit dem vierten Feststellorgan 52, wie vorgängig (Fig. 2) bereits beschrieben.

Wie aus den Fig. 4 und 5 weiter ersichtlich ist. sind die ergänzten Daten 10" gegenüber der ursprüngliche eingescannten Dokumentvorlage 10' in einem vergrösserten Massstab und gedreht zur effektiven physischen Lage der Dokumentvorlage 10 in der Scanner/Druckereinheit 24 auf dem Bildschirm vorhanden. Diese ergänzten Daten 10" müssen vor dem Ausdruck transformiert werden, so dass sie, gemäss der in der Fig. 4 auf der Ausgabeseite 28 der Scanner/Druckereinheit 24 gezeigten ergänzten Dokumentvorlage 14 bezüglich der Grundlinie des Dreiecks und bezüglich dessen Grösse proportional richtig sind. Die Transformationsparameter, mit denen die ergänzten Daten 10" umzurechnen sind, hat der Rechner durch die Drehung der ursprünglich eingescannten Dokumentvorlage 10' um den Winkel 92 erhalten sowie durch die Verschiebebeträge in der X-Richtung 86 und in der Y-Richtung 88 von der ursprünglich eingescannten Dokumentvorlage 10' zu derjenigen, die am Bildschirm als Vorlage zum Ergänzen mit zusätzlichen Daten benutzt worden ist. Ebenfalls der Faktor einer vorgenommenen Grössenänderung ist betragsmässig bekannt. Diese Transformationsgrössen, die beim Kopieren und Transformieren der ursprünglich eingescannten Dokumentvorlage 10' (Fig. 5, unten links) zur zentral auf dem Bildschirm angeordneten vergrösserten Dokumentvorlage 10' entstanden sind, sind in einem Bereich des Datenspeichers abgespeichert worden und können nun dazu benutzt werden, um die zusätzlichen Daten 10", mit denen die auf dem Bildschirm zentral angeordnete Dokumentvorlage 10' ergänzt worden ist, auf die Lage, Grösse und Ausrichtung der physischen Dokumentvorlage 10, die sich in der Scanner/Druckereinheit 24 befindet, umzurechnen.

Mit dem Bezugszeichen 94 sind weitere Werkzeuge angegeben, wie sie heute praktisch jedes text- und grafikverarbeitende Softwareprogramm, das unter Windows lauffähig ist. umfasst. Eine nähere Beschreibung all dieser bekannten weiteren Werkzeuge erübrigt sich deshalb.

## Patentansprüche

1. Verfahren zum optischen Einlesen einer Dokumentvorlage (10) mit einem Scanner (12) und zum Bedrucken eines Aufzeichnungsträgers (14) mit einem Drucker (16), wobei die Dokumentvorlage (10) bzw. der Aufzeichnungsträger (14) mit einer Transportvorrichtung (18) längs einem Transportweg relativ zum Scanner (12) und zum Drucker (16) verschoben und sowohl am Scanner (12) als auch am Drucker (16) vorbeigeführt wird und nach dem optischen Einlesen mit dem Drucker (16) zusammengeführt und als Aufzeichnungsträger (14) bedruckt wird, dadurch gekennzeichnet, dass nach dem Einlesen der Dokumentvorlage (10) mit dem Scanner (12) die Dokumentvorlage (10') auf einem Datensichtgerät (34) eines Rechners (32) sichtbar gemacht und mit Daten (10") ab einem Dateneingabegerät (36, 38) ergänzt wird, und dass die Dokumentvorlage (10) dann als Aufzeichnungsträger (14) lediglich mit den ergänzten Daten (10"') bedruckt wird.

2. Verfahren nach Anspruch 1, dadurch gekennzeichnet, dass die auf dem Datensichtgerät (34) sichtbar gemachte Dokumentvorlage (10') durch ein softwaremässiges Verschieben, Drehen und/oder Verändern der Grösse in eine bezüglich dem Datensichtgerät (34) definierte Anzeigelage gebracht und dann mit den Daten (10") ergänzt wird.

3. Verfahren nach Anspruch 2, dadurch gekennzeichnet, dass die Beträge der Verschiebebewegung (86, 88) und/oder der Grössenveränderung sowie ein Drehwinkel (92) der Drehbewegung als Transformationsparameter in einem Datenspeicher (38) gespeichert werden, wobei die Transformationsparameter vor dem Druckvorgang dazu benutzt werden, um die ergänzten Daten (10") auf die physische Lage und Grösse der Dokumentvorlage (10) bzw. des Aufzeichnungsträgers (14) zu beziehen und als transformierte ergänzte Daten (10"') zu drucken.

4. Vorrichtung mit einem Scanner (12) zum optischen Einlesen einer Dokumentvorlage (10) und mit einem Drucker (16) zum Bedrucken eines Aufzeichnungsträgers (14), sowie mit einer Transporteinrichtung (18) zum relativen Verschieben der Dokumentenvorlage (10) bzw. des Aufzeichnungsträgers (14) zum Scanner (12) bzw. zum Drucker (16) längs einem Transportweg, und mit Mitteln (40, 46, 48, 50, 52), um die Dokumentvorlage (10) nach dem optischen Einlesen mit dem Drucker (16) zusammenzuführen und als Aufzeichnungsträger (14) zu bedrucken, wobei die Dokumentvorlage (10) mit dem Aufzeichnungsträger (14) identisch ist und zwischen dem Scannvorgang und dem Druckvorgang in der Vorrichtung verbleibt, dadurch gekennzeichnet, dass die Vorrichtung einen Rechner (32) mit mindestens einem Datensichtgerät (34), mit einem Dateneingabegerät (36, 38), sowie mit einem Softwareprogramm (40) umfasst, wobei mit dem Softwareprogramm (40) die optisch eingelesene Dokumentvorlage (10) am Datensichtgerät (34) anzeigbar und mit Daten (10") ab dem Dateneingabegerät ergänzbar ist und lediglich diejenigen Daten (10"), mit denen die am Datensichtgerät (34) angezeigte Dokumentvorlage (10') ergänzt worden ist, am Drucker (16) ausgebbar sind.

5. Vorrichtung nach Anspruch 4, dadurch gekennzeichnet, dass das Dateneingabegerät eine Tastatur (36) oder ein Datenspeicher (38) ist.

6. Vorrichtung nach Anspruch 4 oder 5, gekennzeichnet, durch eine Maus (42) zu Steuern des Softwareprogramms (40).

7. Vorrichtung nach einem der Ansprüche 4 bis 6, dadurch gekennzeichnet, dass das Softwareprogramm (40) ein erstes Werkzeug (76) umfasst, womit die am Datensichtgerät angezeigte Dokumentvorlage (10') zusammen mit den ergänzten Daten (10") im Datenspeicher (38) speicherbar sind oder womit lediglich die ergänzten Daten (10") im Datenspeicher speicherbar sind.

8. Vorrichtung nach einem der Ansprüche 4 bis 7, dadurch gekennzeichnet, dass das Softwareprogramm (40) ein zweites Werkzeug (78) umfasst, womit lediglich diejenigen Daten (10"), mit denen die am Datensichtgerät (34) angezeigte Dokumentenvorlage (10') ergänzt worden ist, am Drucker (16) ausgebbar sind.

9. Vorrichtung nach einem der Ansprüche 4 bis 8, dadurch gekennzeichnet, dass das Softwareprogramm (40) ein drittes, viertes und fünftes Werkzeug (80, 82, 84) umfasst um die auf dem Datensichtgerät (34) angezeigte Dokumentvorlage (10') softwaremässig zu transformieren, insbesondere in einer X- und/oder in einer Y-Richtung (86, 88) zu verschieben, und/oder um einen softwaremässig bestimmbaren Drehpunkt (90) um einen Winkel (92) zu drehen, und/oder um die Dokumentvorlage (10') zu vergrössern bzw. zu verkleinern.

10. Vorrichtung nach Anspruch 9, dadurch gekennzeichnet, dass das Softwareprogramm (40) erste Mittel aufweist, womit die mit den dritten, vierten und fünften Werkzeugen (80, 82, 84) durchgeführten Bewegungen (86, 88, 92) der auf dem Datensichtgerät (34) angezeigten Dokumentvorlage (10') als Transformationsparameter im Datenspeicher (38) speicherbar sind.

11. Vorrichtung nach Anspruch 10, dadurch gekennzeichnet, dass das Softwareprogramm (40) zweite Mittel aufweist, womit die ergänzten Daten (10") vor dem Ausgeben zum Drucker (16) mit den Transformationparametern umrechenbar und der physikalischen Lage und Grösse der Dokumentvoriage (10) anpassbar und als transformierte ergänzte Daten (10"') darauf druckbar sind.

12. Vorrichtung nach einem der Ansprüche 4 bis 11, dadurch gekennzeichnet, dass längs dem Transportweg Organe (46, 48, 50, 52) zum Feststellen der relativen Position der Dokumentvorlage (10) zum Scanner (12) bzw. zum Drucker (16) vorhanden sind.

13. Vorrichtung nach einem der Ansprüche 4 bis 12, dadurch gekennzeichnet, dass die Transporteinrichtung (18) mindestens ein Förderorgan (54, 54'; 56, 56'; 58, 58') zum Transportieren der Dokumentvorlage (10) relativ zum Scanner (12) und Drucker (16) umfasst und dass eine Steuereinrichtung (60) zum Umschalten der Antriebsrichtung (64) des Förderorgans (54, 54'; 56, 56'; 58, 58') von einem Vorwärts- zu einem relativen Rückwärtstransport und umgekehrt vorhanden ist.

14. Vorrichtung nach einem der Ansprüche 4 bis 13, dadurch gekennzeichnet, dass der Rechner ein Personalcomputer (34), das Datensichtgerät ein Bildschirm (34) und das Dateneingabegerät eine Tastatur (36) ist.

## Claims

1. Method of optically reading a document model (10) with a scanner (12) and of printing a recording medium (14) with a printer (16), the document model (10) or the recording medium (14), respectively, being shifted with a transport device (18) relative to the scanner (12) and the printer (16) along a transport path and being led past both the scanner (12) and the printer (16), and, after being read optically, being brought together with the printer and being printed as the recording medium (14), characterised in that after reading of the document model (10) with the scanner (12), the document model (10') is made visible on a data display device (34) of a computer (32) and is completed with data (10") from a data input device (36, 38), and in that the document model (10) is then printed as the recording medium (14) with the completed data (10"') only.

2. Method according to claim 1, characterised in that the document model (10'), made visible on the data display device (34), is put into a display position, defined with respect to the data display device (34), by means of shifting, rotating and/or change of size using software, and is then completed with the data (10").

3. Method according to claim 2, characterised in that the amounts of shifting movement (86, 88) and/or of change in size as well as an angle of rotation (92) of the rotating movement are stored as transformation parameters in a data memory (38), the transformation parameters being used before the printing step to correlate the completed data (10") to the physical position and size of the document model (10) or of the recording medium (14), respectively, and to print them as transformed, completed data (10"').

4. Device with a scanner (12) for optical reading of a document model (10) and with a printer (16) for printing of a recording medium (14), and with a transport device (18) for relative shifting of a document model (10) or of a recording medium (14), respectively, with respect to the scanner (12) or the printer (16), respectively, along a transport path, and with means (40, 46, 48, 50, 52) to bring the document model (10), after optical reading, together with the printer (16) and to print it as the recording medium (14), the document model (10), being identical to the recording medium (14) and remaining in the device between the scanning step and the printing step, characterised in that the device comprises a computer (32) with at least one data display device (34), with a data input device (36, 38), and with a software program (40), it being possible with the software program (40) to display the optically read document model (10) on the data display device (34) and to complete it with data (10") from the data input device and only those data (10") with which the document model (10') displayed on the data display device (34) has been completed being able to be printed out on the printer (16).

5. Device according to claim 4, characterised in that the data input device is a keyboard (36) or a data memory (38).

6. Device according to claim 4 or 5, characterized by a mouse (42) to control the software program (40).

7. Device according to one of the claims 4 to 6, characterised in that the software program (40) comprises a first tool (76), with which the document model (10') displayed on the data display device can be stored together with the completed data (10") in the data memory (38) or with which the completed data (10") alone can be stored in the data memory.

8. Device according to one of the claims 4 to 7, characterised in that the software program (40) comprises a second tool (78), with which only those data (10") with which the document model (10') displayed on the data display device (34) has been completed, can be printed out on the printer (16).

9. Device according to one of the claims 4 to 8, characterised in that the software program (40) comprises a third, fourth and fifth tool (80, 82, 84) to transform, by means of software, the document model (10') shown on the data display device (34), in particular to shift it in an X- and/or Y-direction (86, 88), and/or to rotate it about a pivot point (90), determined by software, by an angle (92), and/or to enlarge or reduce in size, respectively, the document model (10').

10. Device according to claim 9, characterised in that the software program (40) has first means with which the movements (86, 88, 92) of the document model (10') displayed on the data display device (34), movements carried out with the third, fourth and fifth tools (80, 82, 84), can be stored as transformation parameters in the data memory (38).

11. Device according to claim 10, characterised in that the software program (40) has second means, with which the completed data (10") can be converted, using the transformation parameters, before being transmitted to the printer (16) and can be adjusted to the physical position and size of the document model (10) and can be printed thereon as transformed, completed data (10"').

12. Device according to one of the claims 4 to 11, characterised in that elements (46, 48, 50, 52) are provided along the transport path to determine the relative position of the document model (10) with respect to the scanner (12) or to the printer (16), respectively.

13. Device according to one of the claims 4 to 12, characterised in that the transport device (18) comprises at least one conveying element (54, 54'; 56, 56'; 58, 58') for transport of the document model (10) relative to the scanner (12) and printer (16), and in that a control device (60) is provided to switch the drive direction (64) of the conveying element (54, 54'; 56, 56'; 58, 58') from a forwards transport to a relative backwards transport and vice-versa.

14. Device according to one of the claims 4 to 13, characterised in that the computer is a personal computer (34), the data display device is a screen (34), and the data input device is a keyboard (36).

## Revendications

1. Procédé de lecture optique d'un document (10) au moyen d'un scanner (12) et d'impression d'un support d'enregistrement (14) au moyen d'une imprimante (16), le document (10) ou le support d'enregistrement (14) étant déplacés par un dispositif de transport (18) le long d'un trajet de transport par rapport au scanner (12) et à l'imprimante (16) et passant devant le scanner (12) aussi bien que devant l'imprimante (16) et, après la lecture optique, amené à l'imprimante (16) et imprimé en tant que support d'enregistrement (14), caractérisé en ce que, après la lecture du document (10) au moyen du scanner (12), le document (10') est affiché sur un appareil de visualisation (34) de données d'un calculateur (32) et complété par des données (10") à partir d'un appareil d'introduction de données (36, 38), et en ce que le document (10) est ensuite imprimé, en tant que support d'enregistrement (14), uniquement avec les données complétées (10"').

2. Procédé selon la revendication 1, caractérisé en ce que le document (10') affiché sur l'appareil de visualisation (34) de données est amené, grâce à une translation, à une rotation ou à une modification de sa taille, ou grâce à plusieurs de ces actions, exécutées au moyen d'un logiciel, dans une position d'affichage définie en ce qui concerne l'appareil de visualisation (34) de données, après quoi ledit document est complété par les données (10").

3. Procédé selon la revendication 2, caractérisé en ce que les valeurs de la translation (86, 88) ou du changement de taille, ou des deux, ainsi qu'un angle de rotation (92) correspondant au mouvement de rotation sont enregistrés, en tant que paramètres de transformation, dans une mémoire (38), les paramètres de transformation étant utilisés, avant l'opération d'impression, pour rapporter les données complétées (10") à la position et à la taille physiques du document (10) ou du support d'enregistrement (14) et les imprimer en tant que données complétées transformées (10"').

4. Dispositif comportant un scanner (12) servant à la lecture optique d'un document (10) et une imprimante (16) servant à imprimer un support d'enregistrement (14), et comportant un dispositif de transport (18) servant au déplacement relatif du document (10) ou du support d'enregistrement (14) par rapport au scanner (12) ou à l'imprimante (16) le long d'un trajet de transport, et pourvu de moyens (40, 46, 48, 50, 52) permettant d'amener le document (10) à l'imprimante (16) après la lecture optique et de l'imprimer en tant que support d'enregistrement (14), le document (10) étant identique au support d'enregistrement (14) et restant dans le dispositif entre le scanage et l'impression, caractérisé en ce que le dispositif comprend un calculateur (32) équipé d'au moins un appareil de visualisation de données (34), avec un appareil d'introduction de données (36, 38) et avec un logiciel (40) qui permet d'afficher le document (10) lu par un système optique sur l'appareil de visualisation de données (34) et de le compléter par des données (10") à partir de l'appareil d'introduction de données, et seules les données (10") avec lesquelles le document (10') affiché sur l'appareil de visualisation de données (34) a été complété peuvent être sorties sur l'imprimante (16).

5. Dispositif selon la revendication 4, caractérisé en ce que l'appareil d'introduction de données est un clavier (36) ou une mémoire (38).

6. Dispositif selon la revendication 4 ou 5, caractérisé en ce qu'une souris (42) commande le logiciel (40).

7. Dispositif selon l'une des revendications 4 à 6, caractérisé en ce que le logiciel (40) comprend un premier outil (76) qui permet de stocker dans la mémoire (38) le document (10') affiché sur l'appareil de visualisation de données, avec les données complétées (10"), ou qui permet de stocker seulement les données complétées (10") dans la mémoire.

8. Dispositif selon l'une des revendications 4 à 7, caractérisé en ce que le logiciel (40) comprend un deuxième outil (78) avec lequel seules les données (10") ayant complété le document (10') affiché sur l'appareil de visualisation de données (34) peuvent être sorties au moyen de l'imprimante (16).

9. Dispositif selon l'une des revendications 4 à 8, caractérisé en ce que le logiciel (40) comprend un troisième, un quatrième et un cinquième outils (80, 82, 84) pour transformer, par le logiciel, le document (10') affiché sur l'appareil de visualisation de données (34), en particulier pour le déplacer dans une direction X ou Y, ou les deux (86, 88), ou bien pour le tourner d'un angle (92) autour d'un centre de rotation (90) pouvant être déterminé par le logiciel, ou bien pour agrandir ou réduire le document (10'), ou bien pour obtenir plusieurs de ces effets ensemble, ou tous à la fois.

10. Dispositif selon la revendication 9, caractérisé en ce que le logiciel (40) possède un premier ensemble de moyens avec lesquels les mouvements (86, 88, 92) du document (10') affiché sur l'appareil de visualisation de données (34), effectués avec les troisième, quatrième et cinquième outils (80, 82, 84), peuvent être stockés dans la mémoire (38) en tant que paramètres de transformation.

11. Dispositif selon la revendication 10, caractérisé en ce que le logiciel (40) possède un deuxième ensemble de moyens avec lesquels, avant d'être délivrées à l'imprimante (16), les données complétées (10") peuvent être converties avec les paramètres de transformation, adaptées à la position et à la taille physiques du document (10) et imprimées dessus en tant que données complétées transformées (10"').

12. Dispositif selon l'une des revendications 4 à 11, caractérisé en ce que des organes (46, 48, 50, 52) servant à fixer la position relative du document (10) par rapport au scanner (12) ou à l'imprimante (16) se trouvent le long du trajet de transport.

13. Dispositif selon l'une des revendications 4 à 12, caractérisé en ce que le dispositif de transport (18) possède au moins un organe de déplacement (54, 54'; 56, 56'; 58, 58') servant à déplacer le document (10) par rapport au scanner (12) et à l'imprimante (16), et en ce qu'un dispositif de commande (60) sert à faire passer le sens d'entraînement (64) de l'organe de déplacement (54, 54'; 56, 56'; 58, 58') d'un déplacement vers l'avant à un déplacement relatif vers l'arrière et inversement.

14. Dispositif selon l'une des revendications 4 à 13, caractérisé en ce que le calculateur est un ordinateur individuel (34), l'appareil de visualisation de données un écran (34) et l'appareil d'introduction de données un clavier (36).
